# EUROPÄISCHE PATENTANMELDUNG

(11) **EP 2 677 381 A1**
(43) Veröffentlichungstag der Anmeldung: **25.12.2013**
(21) Anmeldenummer: 12172971.9
(22) Anmeldetag: 21.06.2012
(51) Int. Cl.: G05B 19/418, G05B 19/414

(54) **Verfahren zum Betreiben eines Automatisierungssystems**

(71) Anmelder: Siemens Aktiengesellschaft, 80333 München (DE)
(72) Erfinder: Graf, Rene, 90443 Nürnberg (DE); Runde, Stefan, 75045 Walzbachtal (DE); Scholz, Andreas, 85716 Unterschleißheim (DE)

(57) **Zusammenfassung**

Die Erfindung betrifft ein Verfahren zum Betreiben eines Automatisierungssystems (10) durch Bereitstellen jeweils mindestens einer Peripherieeinrichtung (14), Netzwerkeinrichtung (26) und Recheneinrichtung (12) als Automatisierungsgeräte des Automatisierungssystems (10), wobei die Peripherieeinrichtung (14) zum Erfassen einer Betriebsgröße einer mit dem Automatisierungssystem (10) gekoppelten Automatisierungsanlage und zum Ansteuern der Automatisierungsanlage mittels einer Stellgröße ausgebildet ist, und wobei die Recheneinrichtung (12) zum Bestimmen der Stellgröße anhand der erfassten Betriebsgröße und/oder anhand einer vorgegebenen Automatisierungsaufgabe (A) ausgebildet ist. Zudem umfasst das Verfahren das Unterteilen der Automatisierungsaufgabe (A) in zumindest zwei Teilaufgaben (A1, A2, A3) und das Zuordnen zumindest einer der Teilaufgaben (A1, A2, A3) an die Recheneinrichtung (12) und einer anderen der Teilaufgaben an ein von der Recheneinrichtung (12) verschiedenes Automatisierungsgerät.

## Beschreibung

Die vorliegende Erfindung betrifft ein Verfahren zum Betreiben eines Automatisierungssystems. Überdies betrifft die vorliegende Erfindung ein Automatisierungssystem.

Automatisierungssysteme umfassen eine Mehrzahl von Automatisierungsgeräten, die sich im Wesentlichen in zwei Gruppen einteilen lassen. Zum einen umfasst das Automatisierungssystem Recheneinrichtungen, die einen Prozessor bzw. eine CPU aufweisen und entsprechende Berechnungen durchführen können. Zum anderen umfassen Automatisierungssysteme üblicherweise Peripherieeinrichtungen, die als Ein-/Ausgabemodule eine physikalische Verbindung zwischen dem zu automatisierenden technischen Prozess und dem automatisiert technischen System darstellen. Die Peripherieeinrichtungen leiten die mit den entsprechenden Sensoren gemessenen physikalischen Größen, wie beispielsweise den Druck, die Temperatur oder die Position, des technischen Prozesses als analoge oder digitale Daten in Form von Kommunikationstelegrammen über Feldbusse an die Recheneinrichtungen weiter, welche die eigentliche Verarbeitung der Daten vornehmen.

Die Organisation und damit die Zuordnung der Peripherieeinrichtungen zu den Recheneinrichtungen ist streng hierarchisch gegliedert, sodass eine N:1 Beziehung zwischen den Peripherieeinrichtungen und den Recheneinrichtungen besteht. Jede Peripherieeinrichtung ist an eine bestimmte Recheneinrichtung angeschlossen, sodass auch nur diese die Daten der Peripherieeinrichtung verarbeiten kann. Dabei erfolgt die Kommunikation über Bussysteme auf dieser Feldebene, die deshalb auch als Feldbus bezeichnet werden. Die Kommunikation der Recheneinrichtungen untereinander sowie die Kommunikation mit Eingabeeinrichtungen oder Wartungsgeräten erfolgt mithilfe eines anderen Bussystems auf der Automatisierungsebene.

Nicht zuletzt aufgrund unterschiedlicher anderer Anforderungen an die Bussysteme auf Feld- und Automatisierungsebene ist die Aufteilung in zwei Bussysteme historisch gewachsen. Zu diesen Anforderungen zählt unter anderem ein deterministisches Zeitverhalten bei der Datenübertragung, um die Daten nicht nur in ihrem Wert, sondern auch in ihrem Zeitverhalten einschätzen zu können. Beim Feldbus sind früher vorwiegend proprietäre Schnittstellen und Protokolle zum Einsatz gekommen, aber inzwischen setzt sich nahezu überall der Standard Ethernet als physikalische Schnittstelle durch. Die Protokolle können aber noch unterschiedlich sein, wobei einige Bus-systeme, wie beispielsweise Profinet, auch das übliche TCP/IP Protokoll unterstützen.

Die eindeutige Zuordnung der Peripherieeinrichtungen zu den Recheneinrichtungen hat zur Folge, dass alle Programme, die auf eines dieser Peripherieeinrichtungen bzw. auf dessen Daten zugreifen, zwingend auf der zugeordneten Recheneinrichtung ablaufen müssen. Die Recheneinrichtung kann zwar die Daten der Peripherieeinrichtung anderen Recheneinrichtungen weitergeben, aber über diesen Weg ist keine deterministische Bearbeitung möglich. Wenn das Programm erweitert wird, kann die Recheneinrichtung möglicherweise nicht ausreichend Rechenleistung bereitstellen, sodass eine weitere Recheneinrichtung in dem Automatisierungssystem bereitgestellt werden muss. Dennoch ist eine einfache Verlagerung von Programmteilen nicht möglich, schon gar nicht im laufenden Betrieb des Automatisierungssystems, da die eine Recheneinrichtung zugeordneten Peripherieeinrichtungen ebenfalls verschoben werden müssten. Dies mag im Stillstand der Automatisierungsanlage theoretisch möglich sein, aber nicht, wenn an einer Peripherieeinrichtung Daten für verschiedene Programmteile anliegen, die nicht alle auf die zusätzliche Recheneinrichtung verlagert werden sollen. Durch die eindeutige Zuordnung zu einer Recheneinrichtung kann eine Peripherieeinrichtung seine Daten nicht an verschiedene Recheneinrichtungen schicken. Des Weiteren bieten die Programmierumgebungen keine Hilfe, ob ein zusätzlicher Programmteil noch in eine Recheneinrichtung geladen werden kann, ohne diese ihre Leistungsfähigkeit überschreitet. Diese Tatsache kann zu Programmfehlern führen, wobei die Recheneinrichtung das Programm in einen "sichersten Zustand" überführt, was gegebenenfalls zu einem Stopp der Automatisierungsanlage führen kann.

Die Hauptursache für die Unflexibilität einer Automatisierungsanlage ist die logische Topologie, die sich aus der Definition der Schnittstellen ergibt. So ist die zuvor beschriebene physikalische Topologie bekannt, bei der eine eindeutige Zuordnung einer Peripherieeinrichtung zu einer Recheneinrichtung vorgesehen ist. Darüber hinaus sind neue physikalische Topologien bekannt, die durch die Verwendung von Ethernet als physikalische Feldbus-Schnittstelle möglich wurde. Dabei wurden wiederum historische Hilfskonstrukte definiert, um dem oben beschriebenen Problem entgegenzuwirken. Damit kann jedoch keine ganzheitliche Lösung geschaffen werden, da die Gegebenheit der Zuordnung von Peripherieeinrichtungen zu Recheneinrichtungen bestehen bleibt.

Es ist daher Aufgabe der vorliegenden Erfindung einen Weg aufzuzeigen, wie ein Automatisierungssystem einfacher und effizienter betrieben werden kann.

Diese Aufgabe wird durch ein Verfahren mit den Merkmalen des Patentanspruchs 1 und durch ein Automatisierungssystem mit den Merkmalen des Patentanspruchs 10 gelöst. Vorteilhafte Weiterbildungen der vorliegenden Erfindung sind in den Unteransprüchen angegeben.

Das erfindungsgemäße Verfahren zum Betreiben eines Automatisierungssystems umfasst das Bereitstellen jeweils mindestens einer Peripherieeinrichtung, Netzwerkeinrichtung und Recheneinrichtung als Automatisierungsgeräte des Automatisierungssystems, wobei die Peripherieeinrichtung zum Erfassen einer Betriebsgröße einer mit dem Automatisierungssystem gekoppelten Automatisierungsanlage und zum Ansteuern der Automatisierungsanlage mittels einer Stellgröße ausgebildet ist, und wobei die Recheneinrichtung zum Bestimmen der Stellgröße anhand der erfassten Betriebsgröße und anhand einer vorgegebenen Automatisierungsaufgabe ausgebildet ist. Darüber hinaus umfasst das Verfahren das Unterteilen der Automatisierungsaufgabe in zumindest zwei Teilaufgaben und das Zuordnen zumindest einer der Teilaufgaben an die Recheneinrichtung und einer anderen der Teilaufgaben an ein von der Recheneinrichtung verschiedenes Automatisierungsgerät.

Das Automatisierungssystem umfasst zumindest eine Peripherieeinrichtung, die einen entsprechenden Sensor umfasst, mit der zumindest eine Betriebsgröße einer Automatisierungsanlage erfasst werden kann. So können beispielsweise entsprechende physikalische Größen, wie beispielsweise der Druck, die Temperatur oder die Position, erfasst werden. Darüber hinaus umfasst die Peripherieeinrichtung einen entsprechenden Aktor, mit dem die Automatisierungsanlage angesteuert werden kann. Des Weiteren umfasst das Automatisierungssystem Netzwerkeinrichtungen, die beispielsweise als Switch ausgebildet sein können, mit denen Daten von den Peripherieeinrichtungen zu den Recheneinrichtungen des Automatisierungssystems übertragen werden können. Mit der zumindest einen Recheneinrichtung können die Stellgrößen für die Peripherieeinrichtungen bestimmt werden. Zu diesem Zweck ist eine entsprechende Automatisierungsaufgabe vorgegeben. Diese Teilaufgabe wird zumindest in zwei Teilaufgaben unterteilt und in verschiedenen Automatisierungsgeräten zugeordnet. Dieser Zuordnung liegt die Erkenntnis zugrunde, dass die Teilaufgaben zusätzlich zu den Recheneinrichtungen auch mit den Netzwerkeinrichtungen und den Peripherieeinrichtungen berechnet werden können. So können Teilaufgaben, die eine geringe Rechenleistung benötigen, mit einer Peripherieeinrichtung oder einer Netzwerkeinrichtung berechnet werden. Damit kann die Rechenleistung, die mit der Recheneinrichtung bereitgestellt wird, reduziert werden.

Das Automatisierungssystem kann auch mehrere Recheneinrichtungen, Netzwerkeinrichtungen und Peripherieeinrichtungen umfassen. Dabei können die Teilaufgaben beliebig auf die einzelnen Automatisierungsgeräte aufgeteilt werden. Dabei soll die strenge Zuordnung von Peripherieeinrichtungen zu Recheneinrichtungen vollständig aufgelöst werden. Alle Automatisierungsgeräte in dem Automatisierungssystem sind gleichberechtigte Partner im Netzwerk, sodass auch jedes Automatisierungsgerät Rechenleistung zur Verfügung stellen kann. Die einzelnen Automatisierungsgeräte können mit einer entsprechenden Datenleitung, insbesondere Ethernet, miteinander verbunden sein, wobei die physikalische Netzwerktopologie durch die Netzwerkeinrichtungen ermöglicht wird. Im Gegensatz zu den aus dem Stand der Technik bekannten Automatisierungssystemen unterscheidet sich die physikalische Topologie des Automatisierungssystems nicht mehr von der logischen Topologie. Damit sind alle Automatisierungsgeräte untereinander gleichberechtigt und können unter voller Beibehaltung des Determinismus kommunizieren. Die aus dem Stand der Technik bekannte Trennung der Kommunikationsmedien in Feldbusse und übergeordnete Bus-Systeme entfällt komplett.

Bevorzugt werden den Automatisierungsgeräten mit dem Zuordnen der Teilaufgaben sowohl ein Programm der jeweiligen Teilaufgabe als auch eine zeitliche Anforderung der jeweiligen Teilaufgabe bereitgestellt. Die Verteilung aller Teilaufgaben für die Automatisierungsaufgabe bzw. die automatisierungstechnische Aufgabenstellung erfolgt offline im Engineering-Werkzeug auf Basis einer Liste, welche in der Realität vorhandenen Automatisierungsgeräte repräsentiert. In der Programmierung im Engineering wird die Automatisierungsaufgabe nicht mehr als Block gesehen, der hardwarespezifisch an eine bestimmte Recheneinrichtung gebunden ist, sondern als Konglomerat von Teilaufgaben, die eine Ausweitung der Selbstbeschreibung aufweisen. Diese Selbstbeschreibung enthält die Implementierung bzw. den Programmcode der Teilaufgabe sowie Attribute zur Beschreibung der Anforderungen. Insbesondere werden die zeitlichen Anforderungen bereitgestellt und/oder Anforderungen, wie schnell und wie häufig der Programmcode laufen muss. Des Weiteren können die Anforderungen eine Information über die Größe des Programmcodes umfassen. Diese Anforderungen können in einer über alle Klassen der Automatisierungsgeräte neutralen Einheit vorliegen.

Bevorzugt umfassen die Teilaufgaben Geräteteilaufgaben, die den Automatisierungsgeräten zugeordnet werden. Insbesondere werden diese Geräteteilaufgaben den Peripherieeinrichtungen zugeordnet. Diese Geräteteilaufgaben sind Teilaufgaben, die fest an ein Automatisierungsgerät gebunden sind, weil sie die vorliegenden physikalischen Messgrößen in kommunikationstechnisch bearbeitbare Telegramme wandeln bzw. diese Telegramme in physikalische Ausgangsgrößen wandeln. Die Zuordnung der Geräteteilaufgaben an die Automatisierungsgeräte erfolgt auf Basis der physikalischen Verdrahtung in der Automatisierungsanlage, wobei dies beispielsweise teil-automatisch erfolgen kann, wenn ein entsprechender Plan des Automatisierungssystems in maschinenlesbarer Form vorliegt. Damit kann eine einfache Zuordnung der Geräteteilaufgaben auf die Automatisierungsgeräte ermöglicht werden.

In einer weiteren Ausführungsform umfassen die Teilaufgaben Rechenteilaufgaben, die den Automatisierungsgeräten in Abhängigkeit von den zugeordneten Geräteteilaufgaben zugeordnet werden. In einem zweiten Schritt der Zuordnung werden die Rechenteilaufgaben, die insbesondere eine Berechnung von Daten umfassen, auf die Automatisierungsgeräte verteilt. Dabei wird berücksichtigt, welchem der Automatisierungsgeräte bereits eine Geräteteilaufgabe zugeordnet wurde. Auf diese Weise können die Rechenteilaufgaben besonders effizient in Abhängigkeit von den bereits verteilten Geräteteilaufgaben verteilt werden.

Bevorzugt werden die Rechenteilaufgaben in Abhängigkeit von einer Topologie des Automatisierungssystems in Automatisierungsgeräten zugeordnet. Zu diesem Zweck können mit den Automatisierungsgeräten entsprechende Daten ausgesendet werden, die Symbole enthalten. Anhand dieser Symbole sind die Automatisierungsgeräte unabhängig von dem konkreten Netzwerk adressierbar. Bevorzugt werden von den Peripherieeinrichtungen entsprechende Daten mit Symbolen ausgesendet. Anhand der Daten und der darin enthaltenen Symbole kann die Verteilung der Automatisierungsgeräte, insbesondere der Automatisierungsgeräte, denen bereits eine Geräteteilaufgabe zugeordnet wurde, ermittelt werden. In Abhängigkeit von dieser Verteilung können dann die Rechenteilaufgaben auf die Automatisierungsgeräte verteilt werden. Dabei kann auch ein entsprechendes Optimierungskriterium, beispielsweise die Minimierung der Netzlast, berücksichtigt werden. Zu diesem Zweck kann ein Optimierungsprozess verwendet werden, der ausgehend von der Topologie des Automatisierungssystems dem Automatisierungsgerät die Rechenteilaufgabe zuordnet, das den geringsten summarischen Abstand zu allen kommunikationstechnisch notwendigen Automatisierungsgeräten hat.

In einer weiteren Ausgestaltung werden die Rechenteilaufgaben in Abhängigkeit von der von dem jeweiligen Automatisierungsgerät bereitstellbaren Rechenleistung und/oder einer für die Berechnung der Rechenteilaufgabe benötigten Zeit zugeordnet. Bei der Zuordnung der Rechenteilaufgaben kann alternativ oder zusätzlich zur Berücksichtigung der Topologie des Automatisierungssystems überprüft werden, ob das Automatisierungsgerät, dem eine Rechenteilaufgabe zugeordnet werden soll, die notwendige Rechenleistung zur Verfügung stellen kann. Ebenso kann überprüft, ob von dem Automatisierungsgerät alle weiteren Attribute, wie z. B. die Zeitanforderung, erfüllt werden kann. Wenn diese Bedingungen erfüllt sind, wird die jeweilige Rechenteilaufgabe dem Automatisierungsgerät zugewiesen und dessen freie Rechenleistung entsprechend vermindert. Falls die Bedingungen nicht erfüllt sind, wird das nächste Automatisierungsgerät gesucht, das im Sinne der Netzwerktopologie den geringsten Abstand hat. Das Automatisierungsgerät, das die notwendige Rechenleistung nicht aufbringen kann, kann aus der Liste der verfügbaren Geräte für die Zuteilung der Teilaufgabe bzw. Automatisierungsaufgabe entfernt werden. Für die Verteilung der nächsten Teilaufgabe bzw. Automatisierungsaufgabe kann dieses Automatisierungsgerät wieder verfügbar sein. In einer Ausgestaltung werden die Teilaufgaben in Abhängigkeit von einer Bedieneingabe einer Bedienperson zugeordnet. Gemäß dem Stand der Technik ist es vorgesehen, dass für eine entsprechende Automatisierungsaufgabe die dafür benötigten Automatisierungsgeräte entsprechend angeordnet und miteinander verbunden werden. Durch die Unterteilung der Automatisierungsaufgabe in Teilaufgaben wird es ermöglicht, dass ein bereits vorhandenes Automatisierungssystem genutzt werden kann und die entsprechenden Teilaufgaben auf die Automatisierungsgeräte verteilt werden. Dies kann vollständig manuell durch den Projekteur bzw. eine Bedienperson erfolgen. Ebenso ist eine geeignete automatisierte Abfrage aller angeschlossenen Geräte denkbar. Somit kann die Entscheidung, ob die Rechenleistung der momentan in dem Automatisierungssystem vorhandenen Automatisierungsgeräte ausreichend ist, offline im Engineering erfolgen. So kann der Projekteuer schon zu diesem Zeitpunkt die Anzahl der für die gesamte Automatisierungsaufgabe notwendigen Automatisierungsgeräte festlegen bzw. im Verlauf der Verteilung anpassen.

Bevorzugt werden die Teilaufgaben von einer Inbetriebnahme des Automatisierungssystems zugeordnet. Die dynamische Verteilung der einzelnen Teilaufgaben auf die vorhandenen Automatisierungsgeräte läuft in zwei Schritten ab. Im ersten Schritt werden die Teilaufgaben offline Automatisierungsgeräten zugeordnet und in einem zweiten Schritt auf die Automatisierungsgeräte online heruntergeladen und dort zum Ablauf gebracht. Die Automatisierungsgeräte können einen dynamischen Programmcode zum Ablauf bringen, der auf sie heruntergeladen wird. Dazu wird neben dem Programmcode eine Beschreibung geladen, die für die Ausführung relevante Parameter, wie die Priorität oder das Zeitverhalten, enthält. Der Programmcode selbst kann auf verschiedene Arten auf die Automatisierungsgeräte geladen werden, beispielsweise in Abhängigkeit der Leistungsfähigkeit der Automatisierungsgeräte. So wird entweder direkt Binärcode für das Automatisierungsgerät vom Engineering-System erzeugt oder das Runtime-Geräte kann sich diesen selbst erzeugen (Onboard-Compiler bzw. -Interpreter), sodass Quellcode in der Originalsprache oder einer Zwischensprache geladen wird. Neben den Ablaufparametern sind auch die notwendigen Kommunikationspartner und -verbindungen beschrieben, sodass vor dem Starten der Automatisierungsaufgabe diese eingerichtet werden.

In einer weiteren Ausgestaltung wird die Betriebsgröße der Automatisierungsanlage mit der Peripherieeinrichtung erfasst und beim Erfassen der Betriebsgröße wird zusätzlich ein Zeitstempel bestimmt. In der Projektierung im Engineering wird keine feste Verbindung von Peripherieeinrichtungen zu Recheneinrichtungen vorgenommen. Dementsprechend können alle Recheneinrichtungen einzelne Daten der Peripherieeinrichtungen lesen bzw. schreiben. Da diese Art der Netzwerktopologie nicht zwingend deterministisch arbeitet, wird die zeitliche Korrektheit der Daten über Zeitstempel hergestellt, die die Peripherieeinrichtungen selbst vergeben. Des Weiteren sind die Uhren aller Automatisierungsgeräte in dem Automatisierungssystem in einer dafür notwendigen Auflösung miteinander synchronisiert.

Das zuvor beschriebene Verfahren kann auch verwendet werden, wenn eine schon laufende Automatisierungsanlage erweitert werden soll. Dazu muss die Automatisierungsanlage nicht gestoppt werden, sondern das Engineering kann die neuen Peripherieeinrichtungen und Recheneinrichtung zunächst offline verteilen und damit ermitteln, ob im gesamten Automatisierungssystem noch genügend freie Rechenleistungen vorhanden sind. Falls dies nicht der Fall ist, kann es eine Abschätzung abgeben, wie leistungsstark das notwendige Automatisierungsgerät mindestens sein sollte. Für die Verteilung neuer Automatisierungsaufgaben bzw. Teilaufgaben bedarf es möglicherweise neuer Peripherieeinrichtungen im Automatisierungssystem. Das Ergänzen des Automatisierungssystems um weitere Peripherieeinrichtungen kann auch im laufenden Betrieb des Automatisierungssystems erfolgen, da zwischen den Peripherieeinrichtungen und den Recheneinrichtungen keine direkte Abhängigkeit besteht.

Das Verfahren zum Betreiben eines Automatisierungssystems lässt auch intelligente Automatisierungsgeräte zu, die beispielsweise ihre Teilaufgaben bereits integriert haben, und diese nur noch parametrieren, z. B. durch die Vergabe der Symbolnamen. Es kann beispielsweise eine Peripherieeinrichtung verwendet werden, die einen Sensor umfasst, der als Teilaufgabe einen Mittelwert von mehreren Messwerten berechnen kann. Ebenso kann ein Automatisierungsgerät auch integrierte Rechenteilaufgaben in Form einer Bibliothek aufweisen, sodass auch hierbei im Rahmen der Verteilung nicht der Programmcode der Teilaufgabe, sondern nur noch ihre Parameter übertragen werden müssen.

Das erfindungsgemäße Automatisierungssystem, das jeweils mindestens eine Peripherieeinrichtung, Netzwerkeinrichtung und Recheneinrichtung als Automatisierungsgeräte umfasst, wobei die Peripherieeinrichtung zum Erfassen einer Betriebsgröße einer mit dem Automatisierungssystem gekoppelten Automatisierungsanlage und zum Ansteuern der Automatisierungsanlage mittels einer Stellgröße ausgebildet ist, und wobei die Recheneinrichtung zum Bestimmen der Stellgröße anhand der erfassten Betriebsgröße und anhand der vorgegebenen Automatisierungsaufgabe ausgebildet ist, weist zusätzlich eine Eingabeeinrichtung auf, die zum Unterteilen der Automatisierungsaufgabe in zumindest zwei Teilaufgaben und zum Zuordnen zumindest einer der Teilaufgaben an die Recheneinrichtung und einer anderen der Teilaufgaben an ein von der Recheneinrichtung verschiedenes Automatisierungsgerät ausgebildet ist. Die zuvor im Zusammenhang mit dem erfindungsgemäßen Verfahren beschriebenen Vorteilen und Weiterbildungen können in gleicher Weise auf das erfindungsgemäße Automatisierungssystem übertragen werden.

Mit dem erfindungsgemäßen Verfahren und dem erfindungsgemäßen Automatisierungssystem kann durch das neue Vorgehen Im Engineering im Allgemeinen und in der Projektierung sowie in der Programmierung im Speziellen einer Automatisierungsaufgabe sowohl die zeitliche als auch die personelle Trennung der dazu notwendigen Einzelschritte ermöglicht werden. Daher muss der Experte für die eigentliche Automatisierungsaufgabe nicht auch ein Experte für deren Umsetzung auf die physikalischen Geräte sein. Zudem kann das Engineering-Werkzeug offline die Auslastung eines Automatisierungsgeräts ermitteln und so dessen Überlastung verhindern, indem es beispielsweise verhindert, dass zusätzliche Teilaufgaben auf das Automatisierungsgerät geladen werden. Das Engineering-Werkzeug kann umgekehrt auch das zur Aufgabe passende Gerät vorschlagen, da es den Rechenaufwand abschätzen kann. Das Automatisierungssystem erlaubt die Verlagerung einer Rechenteilaufgabe von einem Automatisierungsgerät auf ein anderes, ohne von den Restriktionen der direkten Zuordnung und Peripherieeinrichtungen zu Recheneinrichtung betroffen zu sein. Die Verteilung kann neben der freien Rechenleistung auch weitere nicht funktionale Kriterien berücksichtigen, wie beispielsweise die Hochverfügbarkeit oder Fehlersicherheit. Diese wird für eine bestimmte Teilaufgabe festgelegt und die dynamische Verteilung wird diese Aufgabe nur auf Automatisierungsgeräte platzieren, die diese Kriterien erfüllen können. Dabei greifen die obigen Mechanismen zur Veränderung von Überlast in gleicher Weise.

Die vorliegende Erfindung wird nun anhand der beigefügten Zeichnungen näher erläutert. Dabei zeigen:
- FIG 1: ein Automatisierungssystem gemäß dem Stand der Technik;
- FIG 2: ein Automatisierungssystem gemäß dem Stand der Technik in einer weiteren Ausführungsform; und
- FIG 3: ein erfindungsgemäßes Automatisierungssystem.

Die nachfolgend näher geschilderten Ausführungsbeispiele stellen bevorzugte Ausführungsformen der vorliegenden Erfindung dar.

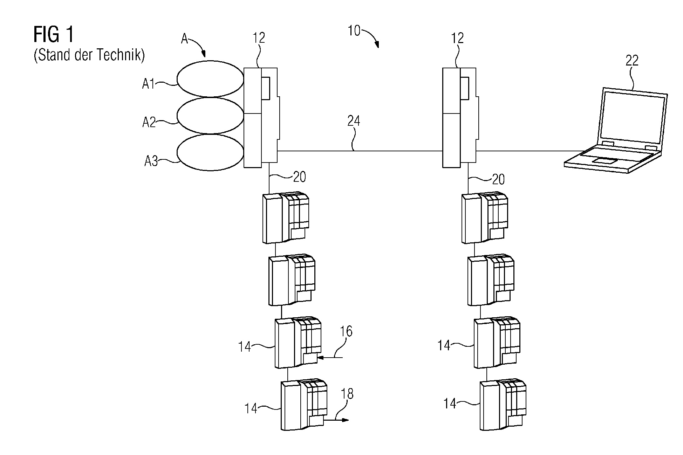

FIG 1 zeigt ein Automatisierungssystem 10 gemäß dem Stand der Technik in einer schematischen Darstellung. Das Automatisierungssystem umfasst vorliegend zwei Recheneinrichtungen 12. Jede der Recheneinrichtungen ist mit vier Peripherieeinrichtungen 14 verbunden. Die Peripherieeinrichtungen 14 sind als Ein-/Ausgabemodule ausgebildet, die zumindest einen Sensor umfassen, mit dem eine physikalische Größe einer hier nicht dargestellten Automatisierungsanlage erfasst werden kann. Das Erfassen einer solchen Betriebsgröße ist durch den Pfeil 16 symbolisiert. Des Weiteren sind die Peripherieeinrichtungen 14 dazu ausgebildet, in Abhängigkeit von einer Stellgröße ein Ausgangssignal zu erzeugen. Die Peripherieeinrichtungen 14 können einen entsprechenden Aktor umfassen, mit dem sie die Automatisierungsanlage bzw. Teile der Automatisierungsanlage steuern. Dies ist durch den Pfeil 18 verdeutlicht.

Jedes der Peripherieeinrichtungen 14 ist an eine bestimmte Recheneinrichtung 12 angeschlossen. Die Kommunikation erfolgt über einen Datenbus 20 auf dieser Feldebene, wobei der Datenbus 20 als Profibus PA oder Profibus DP ausgebildet sein kann. Mit den Recheneinrichtungen 12 können die Daten der Peripherieeinrichtungen 14 verarbeitet werden. So kann anhand der mit den Peripherieeinrichtungen 14 erfassten Betriebsgrößen und anhand einer Automatisierungsaufgabe A mit den Recheneinrichtungen 12 Stellgrößen bestimmt werden, die wiederum an die Peripherieeinrichtungen 14 übertragen werden. Die Automatisierungsaufgabe A kann beispielsweise die Durchflussregelung in einer Automatisierungsanlage betreffen. Dabei umfasst die Automatisierungsaufgabe die Teilaufgaben A1, A2 und A3. Die Teilaufgabe A1 betrifft das "Steuern", die Teilaufgabe A2 betrifft die "Mittelwertbildung" und die Teilaufgabe A3 das "Messen". Vorliegend werden alle Teilaufgaben A1, A2 und A3 der Automatisierungsaufgabe A von einer Recheneinrichtung 12 durchgeführt.

Des Weiteren umfasst das Automatisierungssystem 10 eine Eingabeeinrichtung 22, mit der beispielsweise die Automatisierungsaufgabe A von einer Bedienperson eingegeben werden kann. Die Kommunikation der Recheneinrichtungen 12 untereinander sowie die Kommunikation mit der Eingabeeinrichtung 22 erfolgt einem weiteren Datenbus 24, der beispielsweise als Profibus oder Profinet ausgebildet sein kann. Bei dem Automatisierungssystem 10 gemäß FIG 1 liegt eine strikte Trennung zwischen den Busleitungen 20 und 24 vor.

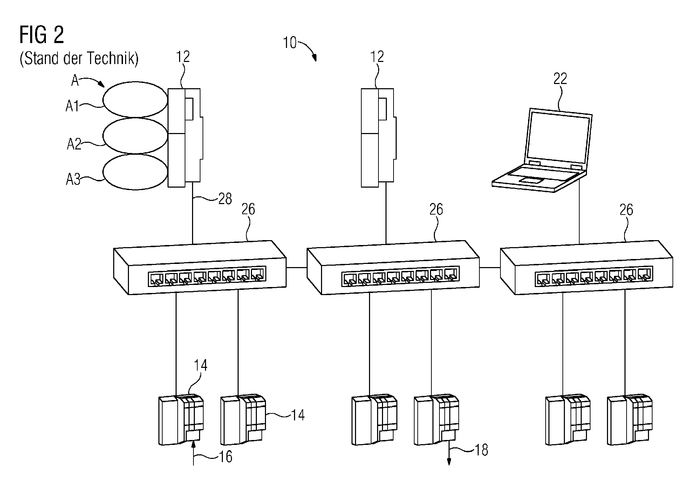

FIG 2 zeigt ein Automatisierungssystem 10 gemäß dem Stand der Technik in einer weiteren Ausführungsform. Auch hier sind zwei Recheneinrichtungen 12 sowie eine Eingabeeinrichtung 22 vorgesehen. Des Weiteren umfasst das Automatisierungssystem sechs Peripherieeinrichtungen 14. Hierbei sind die Peripherieeinrichtungen 14 und Netzwerkeinrichtungen 26 mit den Recheneinrichtungen 12 bzw. der Eingabeeinrichtung 22 verbunden. In dem Automatisierungssystem 10 wird ein einheitlicher Datenbus 28 verwendet, der beispielsweise als Ethernet-Verbindung ausgebildet sein kann. Zwar unterschiedet sich die physikalische Topologie des Automatisierungssystems gemäß FIG 2 und dem Automatisierungssystems 10 gemäß FIG 1, aber die logische Topologie ist identisch. Auch bei dem Automatisierungssystem 10 gemäß FIG 2 sind Peripherieeinrichtungen 14 einer Recheneinrichtung 12 fest zugeordnet. Auch hier wird die Automatisierungsaufgabe A und alle Teilaufgaben A1, A2 und A3 mit einer Recheneinrichtung 12 berechnet.

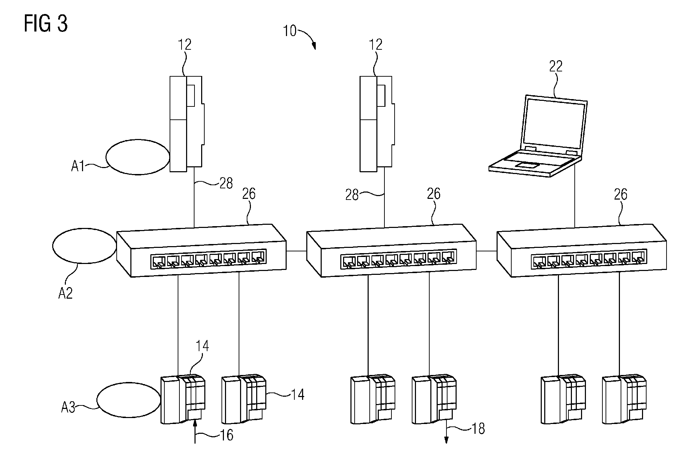

FIG 3 zeigt eine Ausführungsform des erfindungsgemäßen Automatisierungssystems 10 in einer schematischen Darstellung. Die physikalische Topologie des Automatisierungssystems 10 entspricht der, wie sie in FIG 2 gezeigt ist. Allerdings unterscheidet sich die logische Topologie von der, die im Zusammenhang mit FIG 2 beschrieben wurde. Bei dem Automatisierungssystem 10 gemäß FIG 3 ist die strenge Zuordnung der Peripherieeinrichtungen 14 zu den Recheneinrichtungen 12 aufgelöst. Die Automatisierungsgeräte sind alle gleichberechtigte Partner in dem Automatisierungssystem 10.

Die Automatisierungsaufgabe A ist vorliegend in die Teilaufgaben A1, A2, und A3 unterteilt. Die Verteilung der Teilaufgaben A1, A2, A3 wird die automatisierungstechnische Aufgabenstellung erfolgt offline Engineering-Werkzeug auf Basis einer Liste, welche die in der Realität vorhandenen Automatisierungsgeräte des Automatisierungssystems 10 repräsentiert. Diese Verteilung der Teilaufgaben A1, A2, A3 kann beispielsweise durch eine Bedieneingabe der Eingabeeinrichtung 22 erfolgen. Die dynamische Verteilung der einzelnen Teilaufgaben A1, A2, A3 auf die vorhandenen Automatisierungsgeräte läuft in zwei Schritten ab. Die ersten Schritte werden die Teilaufgaben offline in Automatisierungsgeräten zugeordnet und im zweiten Schritt werden die Teilaufgaben A1, A2, A3 online heruntergeladen und zum Ablauf gebracht.

Dabei werden zwei Kategorien von Teilaufgaben A1, A2, A3 unterschieden. Die erste Kategorie der Teilaufgaben A1, A2, A3 sind Geräteteilaufgaben. Diese werden den Automatisierungsgeräten, insbesondere den Peripherieeinrichtungen 14, auf Basis der physikalischen Verdrahtung in der Automatisierungsanlage zugeordnet. Die zweite Kategorie der Teilaufgaben A1, A2, A3 umfasst Rechenteilaufgaben. Diese werden den Automatisierungsgeräten in Abhängigkeit von den bereits verteilten Geräteteilaufgaben zugeordnet. Zu diesem Zweck können die Automatisierungsgeräte, insbesondere die Peripherieeinrichtungen 14, entsprechende Daten mit Symbolen aussenden, anhand der ihre Position im Automatisierungssystem 10 bestimmt werden kann. Anhand eines Optimierungsprozesses kann ausgehend von der Topologie des Automatisierungssystems 10 dem Automatisierungsgerät eine Rechenteilaufgabe zugeordnet werden, dass dem geringsten summarischen Abstand zu allen notwendigen Automatisierungsgeräten aufweist. Im Anschluss daran wird überprüft, ob das ausgewählte Automatisierungsgerät die notwendige Rechenleistung bereitstellen kann.

Nach Verteilung der Teilaufgaben auf die Automatisierungsgeräte wird auf Automatisierungsgeräten der Programmcode der Teilaufgaben dynamisch zum Ablauf gebracht, indem der Programmcode heruntergeladen wird. Dazu wird neben dem Programmcode auch eine Beschreibung geladen, die für die Ausführung relevanter Parameter, wie eine Priorität und ein Zeitverhalten, enthalten. Den Peripherieeinrichtungen 14 werden bevorzugt Geräteteilaufgaben zum Ablauf gebracht. Damit können auf den Peripherieeinrichtungen 14 entsprechende Teilaufgaben zum Ablauf gebracht werden, die eine geringe Rechenleistung benötigen. Im vorliegenden Beispiel wird von den Peripherieeinrichtungen 14 die Teilaufgabe A3 durchgeführt, welche das "Messen" beinhaltet. So kann beispielsweise der Durchfluss in einer Automatisierungsanlage mit zumindest einer Peripherieeinrichtung 14 bestimmt werden. Dabei kann der Durchfluss mit mehreren Peripherieeinrichtungen 14 bestimmt werden. Ebenso ist es denkbar, dass der Durchfluss zu mehreren Zeitpunkten mit einer Peripherieeinrichtung 14 bestimmt wird. Im vorliegenden Beispiel wird der Teilaufgabe A2, der "Mittelwert", mit der Netzwerkeinrichtung 26 bestimmt. Dabei ist es auch denkbar, dass der Mittelwert mit einer Peripherieeinrichtung 14 ermittelt wird. Der bestimmte Mittelwert wird an die Recheneinrichtung 12 übertragen, auf der die Teilaufgabe A1 "Steuern" durchgeführt wird. Somit kann mit der Recheneinrichtung 12 eine entsprechende Stellgröße bestimmt werden, die wie die Peripherieeinrichtungen 14 übertragen wird, mittels welcher der Durchfluss in der Automatisierungsanlage gesteuert wird.

### Bezugszeichenliste

- 10: Automatisierungssystem
- 12: Recheneinrichtung
- 14: Peripherieeinrichtung
- 16: Pfeil
- 18: Pfeil
- 20: Datenbus
- 22: Eingabeeinrichtung
- 24: Datenbus
- 26: Netzwerkeinrichtung
- 28: Datenbus
- A: Automatisierungsaufgabe
- A1, A2, A3: Teilaufgaben

## Patentansprüche

1. Verfahren zum Betreiben eines Automatisierungssystems (10) durch
- Bereitstellen jeweils mindestens einer Peripherieeinrichtung (14), Netzwerkeinrichtung (26) und Recheneinrichtung (12) als Automatisierungsgeräte des Automatisierungssystems (10), wobei
- die Peripherieeinrichtung (14) zum Erfassen einer Betriebsgröße einer mit dem Automatisierungssystem (10) gekoppelten Automatisierungsanlage und zum Ansteuern der Automatisierungsanlage mittels einer Stellgröße ausgebildet ist, und wobei
- die Recheneinrichtung (12) zum Bestimmen der Stellgröße anhand der erfassten Betriebsgröße und/oder anhand einer vorgegebenen Automatisierungsaufgabe (A) ausgebildet ist, **gekennzeichnet durch**
- Unterteilen der Automatisierungsaufgabe (A) in zumindest zwei Teilaufgaben (A1, A2, A3) und
- Zuordnen zumindest einer der Teilaufgaben (A1, A2, A3) an die Recheneinrichtung (12) und einer anderen der Teilaufgaben an ein von der Recheneinrichtung (12) verschiedenes Automatisierungsgerät.

2. Verfahren nach Anspruch 1, **dadurch gekennzeichnet, dass** den Automatisierungsgeräten mit dem Zuordnen der Teilaufgaben (A1, A2, A3) ein Programm der jeweiligen Teilaufgabe (A1, A2, A3) und eine zeitliche Anforderung der jeweiligen Teilaufgabe (A1, A2, A3) bereitgestellt werden.

3. Verfahren nach Anspruch 1 oder 2, **dadurch gekennzeichnet, dass** die Teilaufgaben (A1, A2, A3) Geräteteilaufgaben umfassen, die den Automatisierungsgeräten zugeordnet werden.

4. Verfahren nach Anspruch 3, **dadurch gekennzeichnet, dass** die Teilaufgaben (A1, A2, A3) Rechenteilaufgaben umfassen, die den Automatisierungsgeräten in Abhängigkeit von den zugeordneten Geräteteilaufgaben zugeordnet werden.

5. Verfahren nach Anspruch 4, **dadurch gekennzeichnet, dass** die Rechenteilaufgaben in Abhängigkeit von einer Topologie des Automatisierungssystems (10) den Automatisierungsgeräten zugeordnet werden.

6. Verfahren nach Anspruch 4 oder 5, **dadurch gekennzeichnet, dass** die Rechenteilaufgaben in Abhängigkeit von einer von den jeweiligen Automatisierungsgeräten bereitstellbaren Rechenleistung und/oder einer für eine Berechnung der Rechenteilaufgabe benötigten Zeit zugeordnet werden.

7. Verfahren nach einem der vorhergehenden Ansprüche, **dadurch gekennzeichnet, dass** die Teilaufgaben (A1, A2, A3) in Abhängigkeit von einer Bedieneingabe einer Bedienperson zugeordnet werden.

8. Verfahren nach einem der vorhergehenden Ansprüche, **dadurch gekennzeichnet, dass** die Teilaufgaben (A1, A2, A3) vor einer Inbetriebnahme des Automatisierungssystems (10) zugeordnet werden.

9. Verfahren nach einem der vorhergehenden Ansprüche, **dadurch gekennzeichnet, dass** die Betriebsgröße der Automatisierungsanlage mit der Peripherieeinrichtung (14) erfasst wird und beim Erfassen der Betriebsgröße zusätzlich ein Zeitstempel bestimmt wird.

10. Automatisierungssystem (10), das jeweils mindestens eine Peripherieeinrichtung (14), Netzwerkeinrichtung (26) und Recheneinrichtung (12) als Automatisierungsgeräte umfasst, wobei
- die Peripherieeinrichtung (14) zum Erfassen einer Betriebsgröße einer mit dem Automatisierungssystem (10) gekoppelten Automatisierungsanlage und zum Ansteuern der Automatisierungsanlage mittels einer Stellgröße ausgebildet ist, und wobei
- die Recheneinrichtung (12) zum Bestimmen der Stellgröße anhand der erfassten Betriebsgröße und/oder anhand einer vorgegebenen Automatisierungsaufgabe (A) ausgebildet ist, **gekennzeichnet durch**
- eine Eingabeeinrichtung (22), die zum Unterteilen der Automatisierungsaufgabe (A) in zumindest zwei Teilaufgaben (A1, A2, A3) und zum Zuordnen zumindest einer der Teilaufgaben (A1, A2, A3) an die Recheneinrichtung (12) und einer anderen der Teilaufgaben (A1, A2, A3) an ein von der Recheneinrichtung (12) verschiedenes Automatisierungsgerät ausgebildet ist.
